# EUROPEAN PATENT SPECIFICATION

(11) **EP 2 288 249 B1**
(45) Date of publication and mention of the grant of the patent: **21.12.2016**
(21) Application number: 08749543.8
(22) Date of filing: 11.04.2008
(51) Int. Cl.: A01D 34/416, D01F 6/90

(54) **A CUTTING FILAMENT WITH IMPROVED COMPOSITION FOR EDGE TRIMMERS, SCRUB CUTTERS AND THE LIKE**
SCHNEIDFADEN MIT VERBESSERTER ZUSAMMENSETZUNG FÜR KANTENTRIMMER, BUSCHSCHNEIDER UND DERGLEICHEN
FILAMENT DE COUPE D'UNE COMPOSITION AMÉLIORÉE POUR TAILLE-BORDURE, DÉBROUSSAILLEUSES ET AUTRES

(43) Date of publication of application: 02.03.2011
(73) Proprietor: Speed France S.A.S., 69400 Arnas (FR)
(72) Inventor: LEGRAND, Emmanuel, 01240 Saint Germain sur Renon (FR)
(74) Representative: Regimbeau
(86) International application number: PCT/EP2008/054421
(87) International publication number: WO 2009/124593

(56) References cited:
- WO-A-95/06402
- US-A- 5 350 783
- US-A- 5 759 925
- US-A1- 2002 086 156
- US-A1- 2004 043 689

## Description

The present invention generally relates to devices for cutting vegetation such as scrub cutters, edge trimmers and the like, and is more particularly directed to new cutting filaments for such devices

Such cutting filaments are generally fitted with a combustion engine or electric motor which rotates at a high speed which may be between about 3 000 and 12 000 rpm, a rotary cutting head which carries one or more cutting lines.

Such cutting filament is generally made by extruding/drawing polyamide, and significant developments of these filaments have been known for a few years. For example, suitable shapes for reducing noise, improving cutting efficiency, etc... and the provision of strands in different materials in order to improve cutting efficiency, improve biodegrability to reduce manufacturing costs, etc... had been already disclosed.

The raw materials most often used to make cutting lines are synthetic substances, and more particularly polyamide 6, copolyamide 6/66 and copolyamide 6/9 or 6/12 notably. These substances can be very slightly modified or filled to improve their basic properties. These substances are most often extruded in a form of monofilaments that can have varying diameters and cross-sections, in particular a round cross-section, but also polygonal or star-shaped profiles or cross-sections.

Cutting filaments made from two or more components are also known. They are conventionally manufactured by a co-extrusion method from two sources of different materials.

More specifically, filaments including a main body or core from polyamide and a secondary portion such as a skin totally or partially surrounding the core, from a material different from that of the core, are known. A "different material" means here a material with at least one physical or chemical property which is different from that of the material of the core.

The cutting lines currently manufactured are satisfactory, but their properties, performance or other qualities are still limited by the properties of the raw materials used to make them. In particular, raw materials are more and more expensive due to the increase of crude oil among others. Moreover, traditional cutting lines made of polyamide are virtually non-degradable by oxo-degradation, photo-degradaton or in the environment after use. Even ultra-violet radiation manages to damage the exterior surface at these lines, as do moisture and oxygen contained in the air, their breakdown process is extremely slow, propagated layer by layer from the exterior of the line toward its inside. Note that photo-degradation is degradation of a photodegradable molecule caused by the absorption of photons, particularly those wavelengths found in sunlight, such as infrared radiation, visible light and ultraviolet light. However, other forms of electromagnetic radiation can cause photo-degradation. Photo-degradation includes photo-dissociation, the breakup of molecules into smaller pieces by photons. It also includes the change of a molecule's shape to make it irreversibly altered, such as the denaturing of proteins, and the addition of other atoms or molecules. Furthermore, an oxo-degradation is a multistage process using a chemical additive to initiate degradation over the time.

Moreover, the ends or end portions of such cutting lines made of polyamide tend to fibrillates, i.e. to break up into a number of small fibers having a much smaller cross-section and effective mass than the initial strand.

Since the energy available for cutting is greater at the tip of the filament, any reduction in the cross-sectional area, and effective mass of the filament correspondingly reduces the ability of the filament to cut the vegetation that it strikes.

There is currently no known substance that would by itself be suitable for use in a cutting line that would not fibrillate and retaining its basic qualities.

There is a need for an inexpensive cutting line having an improved efficiency by a reduction or cancellation of its tendency to fibrillate, and optionally that will degrade more quickly in the environment than known filaments.

Accordingly, the present invention provides according to a first aspect a cutting member for a plant-cutting device such as a scrub cutter or edge trimmer characterized in that at least one portion of the cutting member is a mixture of at least a polyamide, low-density Polyethylene (LDPE) and at least one compatibilization agent.

The other thermoplastic is chosen from the following group: Acrylonitrile Butadiene Styrene (ABS), Acrynitrile Methyl Methacrylate (AMMA), Cellulose Acetate (CA), Ethylene/Propylene (E/P), Ethylene/Tetrafluoethylene (ETFE), Ethylene- Vinyl Acetate (EVAC), Ethylene- Vinyl Alcohol (EVOH), Methyl Methacrylate Butadiene Styrene (MABS), Dough Molding Compound (MC), Methyl Methacrylate Butadiene Styrene (MBS), Polyamide Imide (PAI), Polycarbonate (PC), Polyethylene (PE), Polyestercarbonate (PEC), Polyetheretherketone (PEEK), Polyetherester (PEEST), Polyetherketone (PEK), Poly Ethylene Naphtalate Polyester (PEN), Polyethersulfone (PESU), Polyethylene Terephtalate (PETP), Perfluoro Alkoxyl Alkene (PFA), Polyimide (PI), Polyketone (PK), Polymethyl Methecrylate (PMMA), Polymethyl Pentene (PMP), Polyoxymethylene (Acetal) (POM), Polyphenylene Ether (PPE), Polyphenylene Oxide (PPOX), Polyphenylene sulphide (PPS), Polysulfone (PSU), Polytetrafluoroethylene (PTFE), Polyvinyl Acetate (PVAC), Polyvinyl Chloride (PVC), Polyvinylidene Fluoride (PVDF), Polyvinyl Fluoride (PVF), Styrene/Butadiene (S/B), Styrene Maleic Anhydride (SMAH, SM/A, SMA).

Said other thermoplastic material is a linear polyethylene (PE).

Preferentially, said other thermoplastic material is a highly branched or hyper-branched thermoplastic material.

Alternatively, the other thermoplastic material is a low-density polyethylene (PELD).

The cutting member contains from 5 to 50% of said other thermoplastic material.

The Moreover, the cutting member according to the invention further contains at least one compatibilization agent.

Said compatibilization agent is Ethylene Vinyl Acetate (EVA).

The cutting member comprises a first core-forming portion and a second portion at least partially surrounding the core portion and defining at least one area for attacking plants.

Said second portion can entirely surrounds the core of the cutting member.

Embodiments of varying scope are described herein. In addition to the aspects described in this summary, further aspects will become apparent by reference to the drawings and with reference to the detailed description that follows.
- Figure 1 is a schematic sectional perspective view of a cutting filaments with a first construction according to the invention,
- Figure 2 is a schematic sectional perspective view of a cutting filaments with a second construction according to the invention,
- Figure 3 is a schematic sectional perspective view of a cutting filaments with a third construction according to the invention,

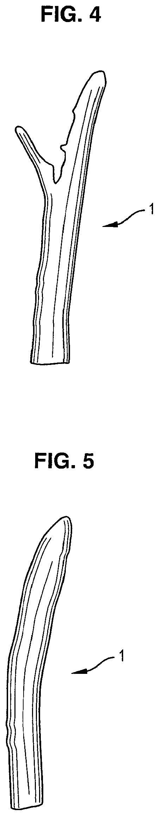

- Figure 4 and 5 are perspective views of a used cutting filament having the construction shown in figure 1, made from polyamide and from a mixture according to the invention, respectively.

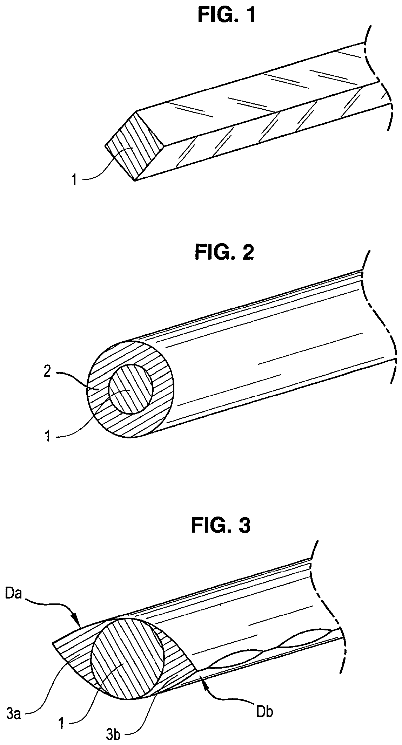

With reference to figure 1, a cutting filament has been illustrated for a motorized plant-cutting device such as an edge cutter, scrub cutter, etc., which has a symmetrical rhombus cross-section 1.

The cutting filament composition contains at least one of compatibilization agent consisting preferably in Ethylene Vinyl Acetate (EVA) or in any polyolefin grafted with maleic anhydride or similar.

For instance, the compatibilizer is a material known per se for compatibilizing polyamides and polyethylenes. Examples which may be mentioned are :
- polyethylene, ethylene-propylene copolymers and ethylene-butene copolymers, where all of these materials are grafted with maleic anhydride or with glycidyl methacrylate,
- ethylene/alkyl (meth)acrylate/maleic anhydride copolymers, where the maleic anhydride is grafted or copolymerized,
- ethylene/vinyl acetate/maleic anhydride copolymers, where the maleic anhydride is grafted or copolymerized,
- the two abovementioned copolymers condensed with polyamides or oligomers of polyamides having only one amine end group,
- the two abovementioned copolymers (ethylene/alkyl (meth)acrylate or ethylene/vinyl acetate) in which the maleic anhydride is replaced by glycidyl methacrylate,
- ethylene/(meth)acrylic acid copolymers and optionally salts of these,
- polyethylene, polypropylene or ethylene-propylene copolymers, where these polymers are grafted with a material containing a site reactive to amines; where these graft copolymers are then condensed with polyamides or polyamide oligomers having only one amine end group.

All these materials are described in the European patent application EP 0342066 and in the US patent US 5,342,886.

Other compatibilization agents such as those described in the US patent US 3,963,799, the international patent application WO96/30447 or in the European patent application EP 1 057 870 can be used.

The In a particular preferred embodiment of the present invention, the cutting filament is made from a mixture of a polyamide, at least a compatibilization angent and low-density polyethylene (LDPE).

The preferred proportion of LDPE is between 5 and 50 % by weight.

In another preferred form of the invention, the other thermoplastic material is a highly branched polymer material, so-called "hyper-branched thermoplastic". "Hyper branched" in the context of the present invention means that the degree of branching (DB) is from 10 to 99,9 %, and preferably from 20 to 99 %, particularly preferably from 20 to 95%. See also P.J. FLORY, J. AM. CHEM. SOC., 1952, 74, 2718, and H. FREY et al., CHEM. EUR. J., 2000, 6, n° 14, 2499 for the definition of hyper branched polymers.

This allows obtaining a cutting filament with appropriate flexibility and hardness, and furthering with the property of limited or no fibrillation even after extensive use.

It should be noted that the cutting filament can have any cross-sectional shape without departing from the scope of the invention.

Figure 2 illustrates a filament construction of the invention with a central core 1 and a skin 2. In the present example, the skin 2 totally surrounds the core 1, although it could only partly surround the core.

The core has a cross-section with a simple or complex shape. In the case in point, the core 1 has a general circular section.

The skin 2 may have any desired cross-section. In the present example, the skin 2 has a circular section 2 coaxial with the core.

In this example, the core 1 is made from the same material as the whole filament disclosed in figure 1, i.e. with a mixture of polyamide, low-density Polyethylene (LDPE) and at least one compatibilization agent.

The skin 2 is made on from a mixture containing a larger proportion of said other thermoplastic material than the mixture used for the core 1.

Finally, figure 3 illustrates another construction of a cutting filament according to the invention, with a central core 1 and two wings 3a, 3b separate from each other and further forming serrated or toothed cutting zones Da and Db.

Advantageously, the filaments according to the invention are made by a conventional extrusion/drawing process (with a co-extrusion in the case of filaments comprising two or more materials) or by injection with a composition as described above. The present further concerns the composition itself.

Moreover, the other thermoplastic material advantageously is a material obtained through recycling, e.g. from the recycling of packaging materials.

This further allows decreasing the manufacturing cost of the filament.

It should be noted here that the present invention may be combined by the skilled person with many other enhancements generally known in the field of cutting filaments (filaments with a particular shape and/or coatings or material combinations from improving the cutting efficiency, reducing the operating noise, enhancing biodegradability, preventing sticking phenomena, etc.).

This written description uses examples to disclose the invention, including the best mode, and also to enable any person skilled in the art to make and use the invention. The scope of the subject matter described herein is defined by the claims and may include other examples that occur to those skilled in the art. For instance, the other thermoplastic material can be a metallocene polyethylene, LDPE from free-radical polymerization, linear low-density polyethylene (LLDPE), or very-low-density polyethylene (VLDPE) which is a copolymer of ethylene and an alpha-olefin selected from among 1-butene, methylpentene, 1-hexene and 1-octene.

Moreover, the invention is intended to any cutting member for a plant-cutting device such as blades as disclosed in the US patent 4,406,065.

## Claims

1. A cutting filament for a plant-cutting device such as a scrub cutter or edge trimmer **characterized in that** at least one portion of the cutting filament is a mixture of at least a polyamide, low-density Polyethylene (LDPE) and at least one compatibilization agent.

2. A cutting filament according to claim 1, **characterized in that** it contains from 5 to 50% by weight of said low-density polyethylene.

3. A cutting filament according to one of claims 1 or 2, **characterized in that** said compatibilization agent is Ethylene Vinyl Acetate (EVA).

4. A cutting filament according to any one of claims 1 to 3, **characterized in that** it comprises a first core-forming portion (1) and a second portion (2) at least partially surrounding the core portion (1) and defining at least one area for attacking plants.

5. A cutting filament according to claim 4, **characterized in that** the second portion (2) entirely surrounds the core (1) of the cutting filament.

6. A cutting filament according to claim 4 or 5, **characterized in that** both cutting filament portions (1, 2) are made from mixtures of at least a polyamide and low-density polyethylene, said second portion being made from a mixture containing a larger proportion of said low-density polyethylene than the first portion.

7. A cutting filament according to any one of claims 1 to 6, **characterized in that** said low-density polyethylene is a recycled material.

## Patentansprüche

1. Schneidfaden für eine Pflanzenschneidevorrichtung, wie zum Beispiel für einen Gestrüppschneider oder Kantenschneider, **dadurch gekennzeichnet, dass** mindestens ein Abschnitt des Schneidfadens ein Gemisch aus mindestens einem Polyamid, Polyethylen niedriger Dichte (LDPE) und mindestens einem Kompatibilisierungsmittel ist.

2. Schneidfaden nach Anspruch 1, **dadurch gekennzeichnet, dass** er 5 bis 50 Gew.-% des Polyethylens niedriger Dichte enthält.

3. Schneidfaden nach einem der Ansprüche 1 oder 2, **dadurch gekennzeichnet, dass** das Kompatibilisierungsmittel Ethylenvinylacetat (EVA) ist.

4. Schneidfaden nach einem der Ansprüche 1 bis 3, **dadurch gekennzeichnet, dass** er einen ersten Kern bildenden Abschnitt (1) und einen zweiten Abschnitt (2) umfasst, der den Kernabschnitt (1) mindestens teilweise umgibt und mindestens eine Fläche zum Angreifen von Pflanzen definiert.

5. Schneidfaden nach Anspruch 4, **dadurch gekennzeichnet, dass** der zweite Abschnitt (2) den Kern (1) des Schneidfadens vollständig umgibt.

6. Schneidfaden nach Anspruch 4 oder 5, **dadurch gekennzeichnet, dass** beide Schneidfadenabschnitte (1, 2) aus Gemischen aus mindestens einem Polyamid und Polyethylen niedriger Dichte hergestellt sind, wobei der zweite Abschnitt aus einem Gemisch hergestellt ist, das einen größeren Anteil an dem Polyethylen niedriger Dichte enthält als der erste Abschnitt.

7. Schneidfaden nach einem der Ansprüche 1 bis 6, **dadurch gekennzeichnet, dass** das Polyethylen niedriger Dichte ein recyceltes Material ist.

## Revendications

1. Filament de coupe pour un dispositif de coupe de plantes tel qu'une débroussailleuse ou un coupe-bordures, **caractérisé en ce qu'**au moins une portion du filament de coupe est un mélange d'au moins un polyamide, de polyéthylène basse densité (PEBD) et d'au moins un agent de compatibilisation.

2. Filament de coupe selon la revendication 1, **caractérisé en ce qu'**il contient de 5 à 50 % en poids dudit polyéthylène basse densité.

3. Filament de coupe selon l'une des revendications 1 ou 2, **caractérisé en ce que** ledit agent de compatibilisation est l'éthylène-acétate de vinyle (EVA).

4. Filament de coupe selon l'une quelconque des revendications 1 à 3, **caractérisé en ce qu'**il comprend une première portion de formation de coeur (1) et une seconde portion (2) entourant au moins partiellement la portion de coeur (1) et définissant au moins une zone pour attaquer des plantes.

5. Filament de coupe selon la revendication 4, **caractérisé en ce que** la seconde portion (2) entoure entièrement le coeur (1) du filament de coupe.

6. Filament de coupe selon la revendication 4 ou 5, **caractérisé en ce que** les deux portions de filament de coupe (1, 2) sont réalisées à partir de mélanges d'au moins un polyamide et de polyéthylène basse densité, ladite seconde portion étant réalisée à partir d'un mélange contenant une proportion plus importante dudit polyéthylène basse densité que la première portion.

7. Filament de coupe selon l'une quelconque des revendications 1 à 6, **caractérisé en ce que** ledit polyéthylène basse densité est un matériau recyclé.
